# EUROPÄISCHE PATENTSCHRIFT

(11) **EP 3 586 308 B1**
(45) Veröffentlichungstag und Bekanntmachung des Hinweises auf die Patenterteilung: **04.12.2024**
(21) Anmeldenummer: 18700745.5
(22) Anmeldetag: 16.01.2018
(51) Int. Cl.: G06T 7/13

(54) **VERFAHREN UND VORRICHTUNG ZUR MEHRFACHKANTENERKENNUNG**
METHOD AND DEVICE FOR MULTIPLE EDGE DETECTION
PROCÉDÉ ET DISPOSITIF DE RECONNAISSANCE D'ARÊTES MULTIPLES

(30) Priorität: 24.02.2017 DE 102017103951
(43) Veröffentlichungstag der Anmeldung: 01.01.2020
(73) Patentinhaber: Volume Graphics GmbH, 69115 Heidelberg (DE)
(72) Erfinder: POLIWODA, Christoph, 69115 Heidelberg (DE); GÜNTHER, Thomas, 69115 Heidelberg (DE); REINHART, Christof, 69115 Heidelberg (DE)
(74) Vertreter: Patentanwälte Olbricht Buchhold Keulertz
(86) Internationale Anmeldenummer: PCT/EP2018/050973
(87) Internationale Veröffentlichungsnummer: WO 2018/153575

(56) Entgegenhaltungen:
- EP-A1- 0 930 499
- US-A1- 2006 262 989
- "Machine Perception", 1 January 1982, PRENTICE-HALL, ISBN: 978-0-13-541904-5, article RAMAKANT NEVATIA: "Chapter 7: Edge and Curve Detection", pages: 100 - 127, XP055435541
- ZIOU D ET AL: "EDGE DETECTION TECHNIQUES-AN OVERVIEW", PATTERN RECOGNITION. IMAGE ANALY, ALLEN PRESS, LAWRENCE, KS, US, vol. 8, no. 4, 1 January 1998 (1998-01-01), pages 537 - 559, XP008029269, ISSN: 1054-6618

## Beschreibung

Die Erfindung betrifft ein computer-implementiertes Verfahren zur Bestimmung von Materialgrenzflächen eines Objekts gemäß Anspruch 1, sowie eine entsprechende Vorrichtung nach Anspruch 9 und ein Computerprogrammprodukt nach Anspruch 10.

Die Bestimmung der Lage von Materialgrenzflächen in einem Objekt durch bildgebende Verfahren ist ein im Stand der Technik allgegenwärtiges Problem. Eine Materialgrenzfläche beschreibt dabei in einem Objekt, wie beispielsweise einem Werkstück, genau jene Grenzfläche, entlang derer in dem Objekt unterschiedliche Materialien aneinander angrenzen. Neben Grenzflächen innerhalb eines Objekts, entlang derer beispielsweise ein Übergang von einem Kunststoff zu einem Metall vorliegt, kann unter einer Materialgrenzfläche auch jene Fläche verstanden werden, welche ein Objekt gegenüber seiner Umgebung bzw. der Umgebungsluft abgrenzt. Somit kann die Bestimmung von Grenzflächen insbesondere auch zur Bestimmung der Abmessungen von untersuchten Objekten dienen. Ein technischer Bereich, in dem die exakte Bestimmung von Grenzflächen zunehmend an Bedeutung gewinnt ist beispielsweise die computertomographische Untersuchung von Werkstücken, die unter anderem in der Fertigung zur Qualitätssicherung verwendet wird.

Unabhängig von dem verwendeten bildgebenden Verfahren besteht im Stand der Technik häufig das Problem, dass dicht beieinanderliegende Materialgrenzflächen nicht präzise oder schlimmstenfalls gar nicht unterschieden werden können. Derart dicht beieinanderliegende Grenzflächen liegen beispielsweise bei einer Beschichtung eines Körpers vor, bei der die Beschichtung beispielsweise nur wenige Mikrometer dick ist. Ferner sind auch dünne Strukturen oder Stege wie beispielsweise Kupferleitungen auf einer Leiterplatte mit den aus dem Stand der Technik bekannten Verfahren häufig nicht oder nur ungenau abbildbar. Ein weiteres Beispiel für schlecht detektierbare Materialgrenzflächen sind Risse und Poren in Werkstücken. Bei einem Riss oder einer Pore handelt es sich nämlich effektiv ebenfalls um eine Abfolge dicht benachbarter Materialgrenzflächen, an denen ein Übergang von dem Material des untersuchten Werkstücks zu Luft und umgekehrt stattfindet. Da solche Risse oder Poren die Funktionalität eines untersuchten Werkstücks massiv beeinträchtigen können, besteht im Stand der Technik ein dringender Bedarf an geeigneten Verfahren, mit denen bei einer Untersuchung eines Werkstücks auch solche "Mehrfachkanten", also dicht aufeinanderfolgende Materialgrenzflächen detektiert werden können. Gleichermaßen besteht ein großer Bedarf für eine Technik zur Detektion von Beschichtungen und deren Dicke, da eine durchgehende, unbeschädigte und ausreichend dicke Beschichtung häufig für die gewünschte Funktionalität eines Werkstücks zwingend erforderlich ist. Auf die Patentschriften EP0930499 A1, US 2006/262989 A1 sowie auf die Publikation von Ziou D et al: "Edge Detection Techniques - An Overview", Pattern Recognition and Image Analysis: Advances in Mathematical Theory and Applications, 1998, 8 (4), pp.537-559, wird zum Thema der Kantenfindung verwiesen.

Hauptmerkmale der Erfindung sind in Anspruch 1, sowie in den Ansprüchen 9 und 10 angegeben. Ausgestaltungen sind Gegenstand der Ansprüche 2 bis 8.

In einem ersten Aspekt betrifft die Erfindung ein computer-implementiertes Verfahren zur Bestimmung von Materialgrenzflächen eines Objekts mittels wenigstens einer Messung an dem Objekt, wobei durch die Messung eine gerasterte Darstellung des Objekts erzeugt wird. Die gerasterte Darstellung weist dabei eine Vielzahl von Messpunkten auf, wobei ein Messpunkt wenigstens eine Bildinformation aufweist. Die Bildinformation zeigt dabei einen Wert einer Messgröße für das Objekt an der Position des Messpunktes an. Das erfindungsgemäße Verfahren weist nun zunächst das Ermitteln einer Parametrisierung der gerasterten Darstellung des Objekts auf, wobei die Parametrisierung den Messpunkten einer Teilmenge der Messpunkte der Darstellung jeweils wenigstens einen Parameter zuordnet. Anschließend wird wenigstens ein parameterabhängiger Kantenfindungsoperator auf die Messpunkte der gerasterten Darstellung angewendet. Ein Kantenfindungsoperator ist dabei dazu ausgebildet, die Lage von wenigstens einer Materialgrenzfläche in der gerasterten Darstellung zu ermitteln.

Bei dem Ermitteln der Lage einer Materialgrenzfläche aus der Bildinformation eines Messpunkts berücksichtigt der Kantenfindungsoperator dabei wenigstens die Bildinformationen einer Teilmenge der zu dem Messpunkt in der gerasterten Darstellung benachbarten Messpunkte. Ferner handelt es sich bei wenigstens einem der Kantenfindungsoperatoren um einen Mehrfachkantenfindungsoperator, der dazu ausgebildet ist, bei Anwendung auf einen Messpunkt die Lage von wenigstens zwei direkt benachbarten Materialgrenzflächen in dem Objekt zu ermitteln. Dabei wird der Mehrfachkantenoperator genau dann auf einen Messpunkt angewendet, wenn wenigstens einer der Parameter des Messpunktes anzeigt, dass innerhalb der Umgebung des Messpunktes mehrere Materialgrenzflächen direkt benachbart zueinander angeordnet sind.

Zur Durchführung der Messung kann dabei ein beliebiges bildgebendes Verfahren Anwendung finden. Insbesondere sind hier die Computertomographie, die Magnetresonanztomographie, die Positronen-Emissions-Tomographie und die 3D-Sonographie zu nennen.

Das erfindungsgemäße Verfahren hat den Vorteil, dass durch die gezielte Anwendung eines Kantenfindungsoperators, der in der Lage ist, auch direkt benachbarte Materialgrenzflächen aufzulösen, auch sehr dünne Strukturen wie beispielsweise Risse und Beschichtungen in einem untersuchten Objekt erkannt werden können. Experimente haben dabei gezeigt, dass Algorithmen zur gezielten Suche nach einer Abfolge direkt benachbarter Materialgrenzflächen einen erhöhten Rechenaufwand gegenüber Algorithmen zur Bestimmung einer einzelnen, isolierten Materialgrenzfläche mit sich bringen. Dieser erhöhte Rechenaufwand wird jedoch erfindungsgemäß auf ein handhabbares Maß reduziert, indem auf Grundlage einer Parametrisierung der Messpunkte ein Mehrfachkantenfindungsoperator nur dann angewendet wird, wenn die Anwendung durch einen entsprechenden Parameter der Messpunkte indiziert ist. Somit ist der Rechenaufwand zur Erkennung von Mehrfachkanten auf ein Minimum reduziert. Wird durch die Parametrisierung eines Messpunktes hingegen nicht angezeigt, dass ein Mehrfachkantenfindungsoperator angewendet werden soll, ist in dem Verfahren vorgesehen, dass ein Kantenfindungsoperator auf den Messpunkt angewendet wird, welcher lediglich zur Detektion einer einzelnen Materialgrenzfläche ausgebildet ist.

Die gerasterte Darstellung des untersuchten Objekts, welche in Folge der Messung erzeugt wird, kann dabei sowohl zweidimensional als auch dreidimensional sein. Im Falle einer dreidimensionalen Darstellung handelt es sich bei den Messpunkten um Volumenpixel bzw. Voxel, während es sich bei der zweidimensionalen Darstellung bei den Bildpunkten um einfache Pixel handelt. Die Bildinformation eine Voxels gibt dabei den mittleren Wert einer Messgröße für das Objekt wieder, der sich durch eine Faltung einer Umgebung um den betrachteten Voxel mit der Punktspreizfunktion (Point Spread Function, PSF) des verwendeten Systems ergibt. Es ist dabei auch möglich eine dreidimensionale Darstellung eines Objekts in eine Serie von zweidimensionalen Schnittbildern der dreidimensionalen Darstellung zu zerlegen.

Bei einem "Wert einer Messgröße" handelt es sich im Allgemeinen um einen Zahlenwert, der eine bestimmte Eigenschaft eines Materials des untersuchten Objekts derart quantifiziert, dass das entsprechende Material in der gerasterten Darstellung von anderen Materialien unterschieden werden kann. Der Wert der Messgröße ist dabei nicht mit dem bzw. den Parametern eines Messpunktes zu verwechseln, welche den Messpunkten in Folge der Parametrisierung der gerasterten Darstellung zugeordnet werden. Während der Wert der Messgröße das Material bzw. eine Materialeigenschaft des untersuchten Objekts beschreibt, dienen die Parameter der Parametrisierung als Zusatzinformation, welche bei der Bestimmung von Materialgrenzflächen verwendet werden kann. Handelt es sich beispielsweise bei dem zur Messung verwendeten bildgebenden Verfahren um eine Computertomographie kann der Wert der Messgröße beispielsweise den Grad der Abschwächung beschreiben, den Röntgenstrahlung erfährt, wenn sich das entsprechende Material durchquert. Die betrachtete Messgröße wäre folglich die Röntgendichte des durchstrahlten Materials. Handelt es sich hingegen bei dem bildgebenden Verfahren um eine Magnetresonanztomographie, kann der Wert der Messgröße die Resonanzfrequenz oder die Relaxationszeit des Materials sein.

Das zur gerasterten Darstellung verwendete Raster kann dabei grundsätzlich jede beliebige Form aufweisen. Im einfachsten Fall weist das Raster orthogonale Achsen auf, welche in alle drei Raumrichtungen in regelmäßigen Abständen in Segmente unterteilt sind. Das von je einem Segment in alle Raumrichtungen umschriebene Volumen definiert dann genau ein Voxel. Das verwendete Raster ist jedoch nicht auf ein solches gleichmäßiges und orthogonales Raster festgelegt. Vielmehr können die Achsen des Rasters auch anderen Anordnungen folgen, sodass sich für die Voxel eine andere, beispielsweise nicht-kubische Form ergibt. So kann ein Raster auch hexagonal ausgeführt sein. Dabei müssen auch nicht alle Voxel oder Pixel in der gerasterten Darstellung gleich groß sein. Vielmehr ist es beispielsweise auch möglich eine Vielzahl von Messpunkten mit identischen Bildinformationen in einem einzigen gemeinsamen Voxel oder Pixel zusammenzufassen.

Unter einem "Parameter", wie er zuvor beschrieben wurde, kann dabei erfindungsgemäß neben einer bloßen Zahl bzw. einem Wert auch eine beliebig komplexe Größe verstanden werden. So kann ein einzelner Parameter eines Messpunkts beispielsweise anzeigen, ob in der Umgebung des Messpunkts eine direkte Abfolge benachbarter Materialgrenzflächen vorliegt, oder nicht. In diesem Fall könnte der Parameter als binäre Größe definiert werden. Der Parameter könnte ferner auch Aufschluss darüber geben, wie viele Materialgrenzflächen in der näheren Umgebung des Messpunkts vorliegen. Schließlich könnte ein Parameter auch eine Information bezüglich der Materialen enthalten, welche bei der oder den Materialgrenzflächen aneinanderstoßen. Beispielsweise könnte so durch den Parameter bereits eine zu erwartende Bildinformation eines Messpunktes codiert sein. Auch weitere, beliebig komplexe Informationen, welche für die Ermittlung einer Materialgrenzfläche relevant sind, können im Weiteren unter dem Begriff "Parameter" subsummiert werden.

Wie zuvor bereits ausgeführt wurde, sind im Stand der Technik bekannte Verfahren zur Detektion von Materialgrenzflächen häufig nicht in der Lage, eine dichte Abfolge von direkt nebeneinander angeordneten Materialgrenzflächen von einer einzelnen Materialgrenzfläche zu unterscheiden, oder die jeweiligen Lagen der einzelnen Materialgrenzflächen bei einer dichten Abfolge nebeneinander angeordneter Materialgrenzflächen exakt zu bestimmen.

Dies ist zumeist auf Unschärfeeffekte in den erzeugten Abbildungen des untersuchten Objekts zurückzuführen. Unter der Bezeichnung "direkt benachbarte Materialgrenzflächen" sind daher all jene Abfolgen von Materialgrenzflächen zu verstehen, die durch einen Kantenfindungsoperator, der lediglich zu Detektion einer einfachen Materialgrenzfläche ausgebildet ist, nicht mehr als individuelle Materialgrenzflächen auflösbar sind. Dabei kann die Bezeichnung "direkt benachbart" je nach verwendetem bildgebendem Verfahren und je nach Messsituation unterschiedliche Längenmaße bezeichnen. Bei einer stark vergrößerten Aufnahme eines Objekts mit einem sehr kleinen Fokus der Messapparatur kann so der Ausdruck "direkt benachbart" auf eine Distanz zwischen zwei Grenzflächen von wenigen Mikrometern abstellen, während bei einer geringeren Vergrößerung eine Abfolge "direkt benachbarter Materialgrenzflächen" auch bei einem Abstand von einigen Millimetern zwischen den Materialgrenzflächen vorliegen kann.

Im Bereich der digitalen Bildverarbeitung sind Operatoren zur Analyse und Bearbeitung von Bilddaten in vielfältigen Varianten bekannt. Ein prominentes Beispiel für einen Operator, welcher in der digitalen Bildverarbeitung häufig zur Erkennung von Kanten eingesetzt wird, ist der Sobel-Operator. Bei dem Sobel-Operator handelt es sich im Wesentlichen um einen Tensor mit Rang n mit definierten Einträgen. Der Rang des Tensors richtet sich dabei nach der Zahl der Dimensionen des untersuchten Bildes. Die Anwendung eines solchen Operators auf ein Bild bzw. einen Bildpunkt erfolgt durch eine diskrete Faltung der Bilddaten einer Abbildung mit dem Tensor des Operators.

Im Rahmen der vorliegenden Anmeldung ist unter der Bezeichnung "Operator" jedoch nicht zwingend nur ein bloßer Tensor zu verstehen. Vielmehr kann es sich bei einem einzelnen Operator im Rahmen der vorliegenden Erfindung um eine beliebig komplexe Kombination von Faltungstensoren, Rechenoperationen, Kurvenfits oder ähnlichem handeln, die in einer bestimmten Abfolge nacheinander ausgeführt werden und jeweils die Ergebnisse von vorangegangenen Operationen des Operators weiterverarbeiten. Dabei muss ein Operator im Kontext der vorliegenden Anmeldung nicht zwingend auch einen Faltungstensor im Sinne des oben beschriebenen Sobel-Operators beinhalten. Es ist vielmehr auch möglich, dass ein Operator vollständig ohne die Durchführung einer Faltung der Abbildungsdaten mit einem Faltungstensor auskommt. Relevant ist bei der Definition eines Operators nur, dass die Anwendung des Operators auf die Abbildungsdaten das gewünschte Ergebnis, nämlich die Erkennung von Materialgrenzflächen erzielt.

Die Bedeutung des Ausdrucks "Anwenden eines parameterabhängigen Operators" kann dabei je nach Anwendungsfall und Art des Operators unterschiedlich sein. So kann, wie zuvor bereits ausgeführt wurde, ein Parameter beispielsweise anzeigen, ob eine Abfolge direkt benachbarter Materialgrenzschichten detektiert werden muss. In diesem Fall besteht die Parameterabhängigkeit darin, dass je nach Wert des Parameters unterschiedliche Operatoren angewendet werden. Die Parameterabhängigkeit kann sich hingegen auch darin äußern, dass eine oder mehrere der bei Anwendung eines Operators durchgeführten Operationen von einem Parameter abhängig sind. Ein Parameter kann dabei in mannigfaltigen Varianten Einfluss auf die Ausführung eines Operators haben. Beispielweise kann durch einen Parameter ein Offset codiert sein, welches bei der Durchführung einer Rechenoperation berücksichtigt werden soll. Ferner kann durch einen Parameter auch eine bestimmte Menge von Messpunkten vorgegeben werden, welche bei der Anwendung des Operators berücksichtigt werden sollen. Auch ist es möglich, dass der Parameter eine Zusatzinformation codiert, welche Einfluss auf die Anwendung des Operators hat.

So kann der Parameter beispielsweise die Impulsantwort des abbildenden Systems, auch als Point Spread Function (PSF) bekannt, beinhalten, sodass diese bei der Anwendung des Operators berücksichtigt werden kann.

Die Lage einer Materialgrenzfläche ist dabei erfindungsgemäß nicht durch das Raster bzw. die Anordnung der Rasterpunkte festgelegt. Vielmehr kann sich die Lage einer im Zuge des Verfahrens ermittelten Materialgrenzfläche auch zwischen den Rasterpunkten befinden. Somit ist durch das erfindungsgemäße Verfahren ferner eine Sub-Pixel- bzw. Sub-Voxel-genaue Bestimmung von Materialgrenzflächen möglich, wobei Grenzflächen je nach Qualität der verwendeten Messdaten mit einer Genauigkeit von 1/100 Voxel und weniger ermittelt werden können.

Nach einer Ausführungsform ist dabei vorgesehen, dass die Bildinformation eines Messpunkts wenigstens einen Grauwert umfasst, der den Wert der Messgröße für das Objekt am Ort des Messpunkts anzeigt. Der Mehrfachkantenfindungsoperator ist dabei dazu ausgebildet, ausgehend von einem Messpunkt durch einen Fit eines theoretischen Modells der Grauwerte für eine Mehrfachkante an die Grauwerte von Messpunkten und/oder an aus den Grauwerten abgeleiteten Werten in der Umgebung des Messpunktes die Lage der einzelnen Materialgrenzflächen einer Mehrfachkante zu ermitteln. Unter einer "Mehrfachkante" wird dabei eine Abfolge direkt benachbarter Materialgrenzflächen verstanden. Die Bezeichnung "am Ort des Messpunktes" beschreibt dabei genau jenen Punkt oder Raumbereich des untersuchten Objekts, welcher in der gerasterten Darstellung dem betrachteten Pixel oder Voxel entspricht. Um eine Mehrfachkante zu detektieren, muss dabei der betrachtete Messpunkt in der näheren Umgebung einer Kante angesetzt werden, bei der es sich möglicherweise um eine Mehrfachkante handelt. Unter einer "näheren Umgebung einer Kante" ist dabei die Menge all jener Bildpunkte zu verstehen, deren Grauwert aufgrund der Impulsantwort des verwendeten Systems durch die Grauwerte von Messpunkten beeinflusst wird, die die zu detektierende Kante abbilden.

Der theoretische Verlauf der Grauwerte für eine Mehrfachkante kann dabei unter Berücksichtigung einer Vielzahl von Einflussgrößen bestimmt werden. Beispielsweise ist es auf diese Weise möglich, den Effekt der PSF des zur Aufnahme der Messpunkte verwendeten Abbildungssystems in der Erstellung des theoretischen Modells zu berücksichtigen. Die PSF eines abbildenden Systems führt dabei im Allgemeinen zu einem "verschmieren" der Messwerte, so dass eigentlich scharfe Kanten eines untersuchten Objekts in der Abbildung, wie sie an Materialgrenzflächen eigentlich vorliegen, als verwaschener, gradueller Übergang erscheinen. Bei der Bestimmung des theoretischen Verlaufs können, sofern bekannt, auch weitere Faktoren berücksichtigt werden, welche bei der Messung an dem Objekt zu einer nicht-idealen Abbildung des Objekts führen. Ferner kann der theoretische Verlauf der Grauwerte in Abhängigkeit der erwarteten Zahl von Materialgrenzschichten ermittelt werden. So kann nach einer Ausführungsform vorgesehen sein, dass ein Parameter eines Messpunktes nicht nur anzeigt, ob in der direkten Umgebung des Messpunkts eine Mehrfachkante vorliegt, sondern auch wie viele einzelne Materialgrenzschichten die Mehrfachkante enthält. Dementsprechend kann bei Anwendung des Mehrfachkantenfindungsoperators genau der erwartete theoretische Verlauf der Grauwerte für die Ermittlung der Lagen der Materialgrenzschichten verwendet werden, welcher unter der Annahme der korrekten Zahl von einzelnen Materialgrenzschichten ermittelt wurde.

Durch die Anpassung des theoretischen Verlaufs der Grauwerte einer Mehrfachkante an die vorliegenden Grauwerte kann auf effiziente Art und Weise die Position der einzelnen Materialgrenzschichten ermittelt werden. Dabei kann ein beliebiges Verfahren der Ausgleichrechnung zur Anpassung des theoretischen Verlaufs an die Messwerte verwendet werden. Beispielsweise kann hier das Verfahren der kleinsten Fehlerquadrate angewendet werden. Durch die Wahl der durchgeführten Iterationen zur Kurvenanpassung kann dabei die Genauigkeit der Kantenermittlung gegenüber der verursachten Rechenlast abgewogen werden.

Nach einer weiteren Ausführungsform ist vorgesehen, dass die Parametrisierung für eine Teilmenge der Messpunkte jedem Messpunkt der Teilmenge jeweils wenigstens zwei Parameter zuordnet. Für die Messpunkte der Teilmenge wird dabei je zugeordnetem Parameter ein parameterabhängiger Kantenfindungsoperator auf den Messpunkt angewendet. Beispielsweise kann es vorkommen, dass bei der Erstellung der Parametrisierung zwar bekannt ist, wo potentiell Mehrfachkanten auftreten könnten, jedoch nicht wie viele einzelne Materialgrenzschichten in den Mehrfachkanten enthalten sind. In diesem Fall kann die Parametrisierung unterschiedliche Anzahlen von einzelnen Materialgrenzflächen in den zu detektierenden Mehrfachkanten definieren, sodass die entsprechenden Mehrfachkantenfindungsoperatoren auf den Messpunkt angewendet werden. So kann beispielsweise durch eine geeignete Parametrisierung ein definiertes Spektrum von potentiellen Mehrfachkanten definiert werden.

Neben der Darstellung einer Information, ob in der Umgebung eines Messpunktes eine Mehrfachkante vorliegt, können die Parameter der Parametrisierung auch weitere Informationen enthalten, welche bei der Detektion von Materialgrenzschichten von Nutzen sein können. So ist nach einer weiteren Ausführungsform vorgesehen, dass wenigstens einer der Parameter eines Messpunktes eine Analyserichtung innerhalb der gerasterten Darstellung definiert. Die Kantenfindungsoperatoren sind dann bei Anwendung auf einen Messpunkt dazu ausgebildet, entlang der durch den Parameter des Messpunkts definierten Analyserichtung die Lage wenigstens einer Materialgrenzfläche zu ermitteln. Unter einer "Analyserichtung" kann dabei eine Richtung innerhalb des Rasters der gewählten Darstellung des Objekts verstanden werden. Die Analyserichtung kann beispielsweise durch einen Vektor angegeben werden, welcher in dem durch das Raster aufgespannten Koordinatensystem definiert ist.

Die durch einen Parameter definierte Analyserichtung kann dabei beispielsweise aus der Kenntnis der grundsätzlichen geometrischen Form des untersuchten Objekts abgeleitet werden. Experimente haben gezeigt, dass durch eine feste Definition der Analyserichtung die Präzision der Kantenfindung gegenüber im Stand der Technik bekannten Verfahren, welche beispielweise die Analyserichtung aus einem Gradienten der Grauwerte bestimmen, verbessert werden kann. Ferner können bei der Definition der Analyserichtung besondere Geometrien oder Begebenheiten des untersuchten Objekts Berücksichtigung finden, welche bei der anderweitigen Bestimmung der Analyserichtung, beispielsweise durch Bestimmung eines Gradienten der Grauwerte, nicht berücksichtigt werden könnten.

Die zuvor beschriebene Definition von Analyserichtungen kann nach einer weiteren Ausführungsform mit der Idee kombiniert werden, dass zumindest einer Teilmenge der Messpunkte mindestens zwei Parameter zugeordnet sind. So ist nach einer Ausführungsform vorgesehen, dass für eine Teilmenge der Messpunkte durch wenigstens zwei der Parameter eines Messpunktes jeweils eine Analyserichtung definiert wird, wobei je Analyserichtung wenigstens ein Kantenfindungsoperator auf den Messpunkt angewendet wird, der entlang der jeweiligen Analyserichtung die Lage wenigstens einer Materialgrenzfläche ermittelt. Durch die Vorgabe mehrerer Analyserichtungen in denen ausgehend von einem Messpunkt nach Materialgrenzflächen gesucht wird, hat den Vorteil, dass auch komplexe und mit den im Stand der Technik bekannten Verfahren nur ungenau detektierbare Geometrien wie beispielsweise rechtwinklige Ecken sicher und exakt detektiert werden können. So ist beispielsweise bei der Ermittlung der Analyserichtung aus einem Gradienten der Grauwerte, wie sie aus dem Stand der Technik bekannt ist, eine sichere und genaue Detektion von Ecken und Winkeln nicht möglich. Vielmehr ist bei der Verwendung einer aus einem Gradienten bestimmten Analyserichtung im Bereich der Ecken ein "Verschwimmen" bzw. "Verrunden" der Grenzflächen zu erkennen, infolge dessen Materialgrenzflächen im Bereich von Ecken nicht spitz, sondern vielmehr abgerundet erscheinen. Trennt man jedoch die Analyse einer solchen Ecke in jeweils eine Analyse pro Kantenrichtung auf, können die zuvor genannten Effekte der unsauberen Kantenfindung im Bereich von Winkeln und Ecken vermieden werden.

Die Parametrisierung, welche erfindungsgemäß bei der Ermittlung von Materialgrenzflächen genutzt wird, wird nach einer Ausführungsform aus einem Modell des untersuchten Objekts bestimmt. So kann beispielweise aus einem Modell direkt abgeleitet werden, an welchen Stellen Beschichtungen vorgesehen sind, wo erfahrungsgemäß bei der Produktion eines Objekts Risse in dem Material entstehen können, oder wo in dem Objekt besondere Geometrien wie Ecken und Winkel vorliegen, welche bei der Ermittlung der Materialgrenzflächen gesondert berücksichtigt werden müssen. Das so ermittelte Parametermodell kann dann auf die Daten aus einer Messung an dem Objekt übertragen werden, sodass die anschließende Ermittlung der Materialgrenzflächen mittels geeigneter Kantenfindungsoperatoren erfolgen kann, welche wiederum von den Parametern der Parametrisierung abhängen. Ein solches Modell kann durch einen weiteren Messvorgang abgeleitet werden, beispielsweise durch eine optische Messung. Beispielsweise kann die Oberfläche des zu untersuchenden Objekts zunächst mittels eines Lasers abgetastet werden, sodass ein Oberflächenmodell erstellt werden kann.

Alternativ handelt es sich bei dem Modell des untersuchten Objekts nach einer Ausführungsform um ein CAD-Modell. Die Verwendung eines CAD-Modells hat dabei den Vorteil, dass das Modell des untersuchten Objekts bereits vollständig in digitaler Form mit den geplanten Bema-βungen vorliegt, sodass es mit geringem Aufwand auf Messdaten aus einer Messung an dem Objekt übertragbar ist.

Neben der Verwendung eines CAD-Modells kann nach einer weiteren Ausführungsform auch vorgesehen sein, dass die Parametrisierung durch wenigstens eine Benutzereingabe erzeugt wird. Beispielsweise kann vorgesehen sein, dass sich ein Anwender, welcher die Untersuchung des Objekts überwacht, die im Zuge der Messung erzeugte gerasterte Darstellung des untersuchten Objekts inspiziert und nach Augenschein oder aufgrund von Erfahrungswerten mittels eines entsprechenden Eingabegerätes Bereiche markiert, in denen mit einer Mehrfachkante zu rechnen ist. Ferner kann der Anwender auch die Analyserichtungen bei der später erfolgenden Kantenfindung mittels einer entsprechenden Schnittstelle in der angezeigten gerasterten Darstellung definieren.

Ferner kann eine Parametrisierung zumindest hinsichtlich der Anwendung eines Mehrfachkantenfindungsoperators auch direkt aus der gerasterten Darstellung abgeleitet werden, welche aus der Messung an dem Objekt erhalten wurde. Hierzu ist erfindungsgemäss vorgesehen, dass das Ermitteln der Parametrisierung zunächst das Anwenden eines Einzelkantenfindungsoperators auf die Messpunkte der gerasterten Darstellung aufweist, wobei der Einzelkantenfindungsoperator dazu ausgebildet ist, die Lage einer einzelnen Materialgrenzfläche in der gerasterten Darstellung zu ermitteln. Anschließend wird für die Lage der zuvor ermittelten Materialgrenzflächen ein Unsicherheitsmaß ermittelt. Übersteigt das so ermittelte Unsicherheitsmaß für eine Materialgrenzfläche einen definierten Grenzwert, umfasst das Ermitteln der Parametrisierung weiter das Zuordnen eines Parameters zu den Messpunkten in der Umgebung der Materialgrenzfläche, wobei der Parameter jeweils anzeigt, dass innerhalb der Umgebung des Messpunktes mehrere Materialgrenzflächen direkt benachbart zueinander angeordnet sind und folglich ein Mehrfachkantenoperator zur Anwendung kommen soll.

Ein Unsicherheitsmaß für die Lage einer ermittelten Materialgrenzfläche kann dabei beispielsweise bestimmt werden, indem der Gradient der Grauwerte über die ermittelte Materialgrenzfläche ermittelt wird. Handelt es sich dabei bei der Materialgrenzfläche tatsächlich um eine isolierte, einzelne Materialgrenzfläche, wäre zu erwarten, dass der Gradient über die Materialgrenzfläche im Wesentlichen durch die Impulsantwort des verwendeten Systems und den zur Bestimmung des Gradienten verwendeten Operators bestimmt ist. Unter der Annahme einer gaußförmigen Impulsantwort und einer gaußförmigen Glättung zur Bestimmung des Gradienten wäre so zu erwarten, dass der Gradient über eine Materialgrenzfläche einen gaußförmigen Verlauf aufweist. Weicht jedoch der ermittelte Gradient signifikant von der erwarteten Gaußform ab, handelt es sich wahrscheinlich bei der ermittelten Materialgrenzfläche nicht um eine isolierte Kante, sondern wenigstens um eine Abfolge zweier oder mehrerer direkt benachbarter Kanten. Der dabei verwendete Grenzwert kann beispielsweise durch wiederholte Messungen bzw. Bestimmungen der Parametrisierung und einen Vergleich der Parametrisierung mit den tatsächlichen Gegebenheiten des untersuchten Objekts ermittelt werden. Auf diese Art und Weise kann auch bei anfänglich fehlender Information bezüglich der Geometrie des untersuchten Objekts eine geeignete Parametrisierung des untersuchten Objekts ermittelt werden, welche dann für eine sichere Kantenerkennung verwendet werden kann.

Zur Bestimmung eines Unsicherheitsmaßes kann ferner auch direkt geprüft werden, wie gut die Grauwerte im Bereich einer untersuchten Materialgrenzfläche zu einer Einzelkante passen. Bei der Ermittlung der Kantenposition durch einen Fit eines Modells einer Einzelkante an die Grauwerte im Bereich der Materialgrenzfläche, kann an den Ergebnissen beispielsweise mittels eines *χ*²-Tests überprüft werden, wie gut der Fit des Modells der Einzelkante zu den vorliegenden Grauwerten passt. Ab einem bestimmten Schwellwert für *χ*² kann dann davon ausgegangen werden, dass die Grundannahme, es handele sich bei der Materialgrenzfläche um eine Einzelkante, nicht stimmen kann. Folglich kann den entsprechenden Bildpunkten ein Parameter zugeordnet werden, der anzeigt, dass vermutlich eine Mehrfachkante vorliegt.

Die beschriebene Ermittlung der Parametrisierung kann dabei als iterativer Prozess implementiert werden. Dabei wird zunächst über die gesamte gerasterte Darstellung mittels eines Operators zur Detektion von isolierten Materialgrenzflächen eine Ermittlung der Materialgrenzflächen durchgeführt. Anschließend wird wie zuvor beschrieben geprüft, ob die so ermittelten Materialgrenzflächen möglicherweise keine isolierten Grenzflächen sind, sondern als Mehrfachkante behandelt werden müssen. In den Fällen, in den dabei ermittelt wird, dass es sich bei der ermittelten Materialgrenzfläche möglichweise um eine Mehrfachkante handelt, wird dann bei den entsprechenden Messpunkten ein Parameter gesetzt, welcher die Anwendung eines Kantenfindungsoperators zu Detektion von Doppelkanten, also von zwei direkt aufeinanderfolgenden Materialgrenzflächen anzeigt.

Anschließend wird für all jene Bereiche, in denen ein solcher Parameter gesetzt wurde, eine erneute Ermittlung von Materialgrenzflächen durchgeführt, wobei bei dem zweiten Durchgang ein Kantenfindungsoperator für Doppelkanten bei den durch die entsprechenden Parameter indizierten Bereichen auf die Messpunkte angewendet wird. Anschließend wird wiederum für die ermittelten Doppelkanten geprüft, ob es sich möglicherweise nicht um eine Abfolge zweier Materialgrenzflächen, sondern einer größeren Zahl von Materialgrenzflächen handelt. Für alle jene Bereiche, bei denen dies der Fall ist, wird dann wiederum ein entsprechender Parameter an den relevanten Messpunkten gesetzt, sodass bei einem nachfolgenden Kantenfindungsprozess ein Kantenfindungsoperator angewendet wird, welcher zu Detektion einer Abfolge von drei direkt benachbarten Materialgrenzflächen ausgebildet ist.

Durch eine iterative Steigerung der Zahl der gesuchten Materialgrenzflächen kann so die gerasterte Darstellung nach Mehrfachkanten beliebiger Ordnung also mit einer beliebigen Anzahl aufeinanderfolgender Materialgrenzflächen sukzessive ausgeführt werden.

In einem weiteren Aspekt betrifft die Erfindung eine Vorrichtung zur Durchführung von Messungen an einem Objekt und zur Bestimmung von Materialgrenzflächen eines Objekts mittels wenigstens einer Messung an dem Objekt, wobei durch die Messung eine gerasterte Darstellung des Objekts erzeugt wird, und wobei die gerasterte Darstellung eine Vielzahl von Messpunkten aufweist. Ein Messpunkt weist wenigstens eine Bildinformation auf, welche einen materialspezifischen Parameter des Objekts an der Position des Messpunktes anzeigt. Die Vorrichtung ist dazu ausgebildet, eine Parametrisierung der aus der Messung erhaltenen gerasterten Darstellung des Objekts zu ermitteln, wobei die Parametrisierung jedem Messpunkt der Darstellung jeweils wenigstens einen Parameter zuordnet. Ferner ist die Vorrichtung dazu ausgebildet, wenigstens einen parameterabhängigen Kantenfindungsoperator auf die Messpunkte der gerasterten Darstellung anzuwenden, wobei ein Kantenfindungsoperator dazu ausgebildet ist, aus der Bildinformation eines Messpunkts die Lage von wenigstens einer Materialgrenzfläche in der gerasterten Darstellung zu ermitteln. Der Kantenfindungsoperator berücksichtigt bei dem Ermitteln der Lage einer Materialgrenzfläche aus der Bildinformation eines Messpunkts wenigstens die Bildinformationen einer Teilmenge der zu dem Messpunkt in der gerasterten Darstellung benachbarten Messpunkte. Dabei handelt es sich bei wenigstens einem der Kantenfindungsoperatoren um einen Mehrfachkantenfindungsoperator, der dazu ausgebildet ist, bei Anwendung auf einen Messpunkt die Lage von wenigstens zwei direkt benachbarten Materialgrenzflächen in dem Objekt zu ermitteln. Der Mehrfachkantenfindungsoperator wird genau dann auf einen Messpunkt angewendet, wenn wenigstens einer der Parameter des Messpunktes anzeigt, dass innerhalb der Umgebung des Messpunktes mehrere Materialgrenzflächen direkt benachbart zueinander angeordnet sind. Das Ermitteln der Parametrisierung weisst die folgenden Schritte auf:
- Anwenden wenigstens eines Einzelkantenfindungsoperators auf die Messpunkte der gerasterten Darstellung, wobei der Einzelkantenfindungsoperator dazu ausgebildet ist, die Lage einer einzelnen Materialgrenzfläche in der gerasterten Darstellung zu ermitteln,
- Ermitteln eines Unsicherheitsmasses für die Lage der ermittelten Materialgrenzflächen,
- wenn das ermittelte Unsicherheitsmass für eine Materialgrenzfläche einen definierten Grenzwert übersteigt, das Zuordnen eines Parameters zu den Messpunkten in der Umgebung der Materialgrenzfläche, wobei der Parameter anzeigt, dass innerhalb der Umgebung des Messpunktes mehrere Materialgrenzflächen direkt benachbart zueinander angeordnet sind.

In noch einem weiteren Aspekt betrifft die Erfindung ein Computerprogrammprodukt mit von einem Computer ausführbaren Instruktionen, welche auf einem Computer ausgeführt den Computer dazu veranlassen, das Verfahren, wie es zuvor beschrieben wurde, durchzuführen. Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: schematische Darstellungen einer einfachen Materialgrenzfläche und einer Mehrfachkante,
- Fig. 2: schematische Darstellungen einer Ecke mit unterschiedlichen Analyserichtungen, und
- Fig. 3: ein Ablaufdiagramm zur Durchführung des erfindungsgemäßen Verfahrens.

Im Folgenden werden einander ähnliche oder identische Merkmale mit denselben Bezugszeichen gekennzeichnet.

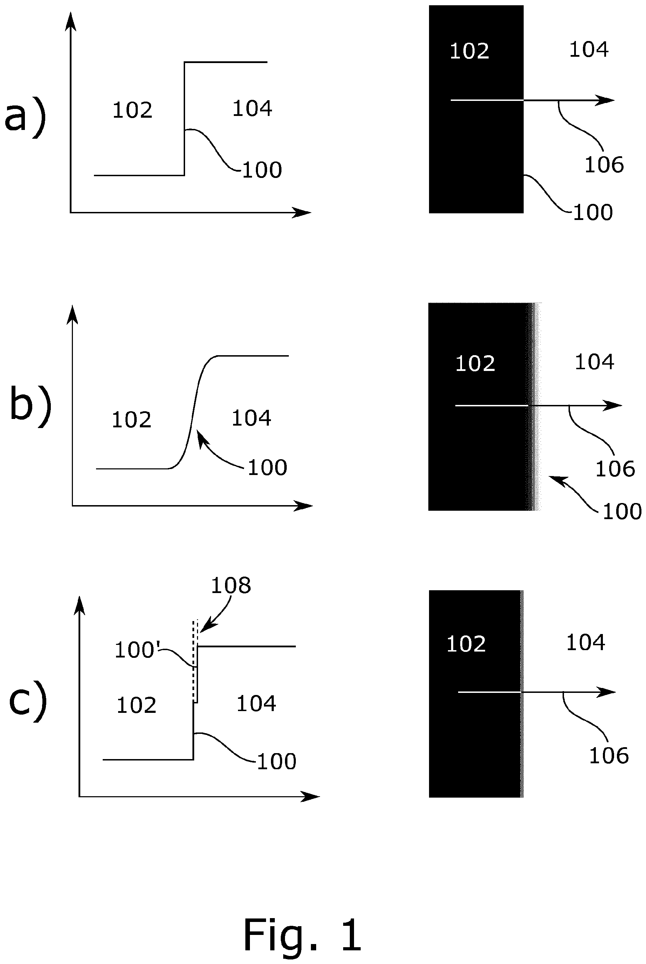

In der Fig. 1 a) ist schematisch eine idealisierte, technisch jedoch nicht realisierbare Abbildung einer Materialgrenzfläche 100 dargestellt, welche den Übergang zwischen einem ersten Bereich 102 mit einem ersten Material und einem zweiten Bereich 104 mit einem zweiten Material in einem Objekt darstellt. Dabei ist rechts eine zweidimensionale Darstellung des Übergangs dargestellt. Eine solche Darstellung kann theoretisch beispielsweise durch eine Untersuchung eines Objekts mittels eines Computertomographen erhalten werden. Dabei wird ein Objekt mittels Röntgenstrahlen durchleuchtet, wobei die Röntgenstrahlen nach Durchtritt durch das untersuchte Objekt einen hinter dem Objekt liegenden Detektor belichten. Aufgrund unterschiedlicher Röntgendichten der in einem Objekt vorhandenen Materialien, werden dabei die das Objekt durchdringenden Röntgenstrahlen unterschiedlich stark abgeschwächt, sodass aus der durch den Detektor absorbierten Röntgenintensität auf die jeweilige Dichte bzw. Röntgenabsorption der durchstrahlten Medien des betrachteten Objekts geschlossen werden kann. Bei einer Computertomographie werden dabei Röntgenaufnahmen aus unterschiedlichen Richtungen durchgeführt, wobei aus der Summe der Röntgenaufnahmen anschließend eine dreidimensionale Abbildung des Objekts rekonstruiert wird. Die in Fig. 1 a) abgebildete Darstellung ist dabei eine zweidimensionale Schnittansicht, welche aus der dreidimensionalen Abbildung abgeleitet werden kann. Die Erfindung ist jedoch nicht auf eine solche zweidimensionale Abbildung beschränkt, sondern kann auch in einer dreidimensionalen Abbildung angewendet werden.

Bei der in Fig. 1 a) dargestellten Materialgrenzfläche 100 kann es sich beispielsweise um den Übergang von Luft zu einem Metall handeln. Aufgrund der geringeren Röntgenabsorption von Luft erscheint der Bereich 102 dunkler als der Bereich 104.

In Fig. 1 a) ist links ferner eine Darstellung der Röntgendichte entlang des Pfeils 106 dargestellt. Der Pfeil 106 ist dabei senkrecht zu der Materialgrenzfläche 100 ausgerichtet. Dabei ist die Position entlang des Pfeils 106 auf der horizontalen Achse aufgetragen, während die entsprechende Röntgendichte an jeder Position auf der vertikalen Achse aufgetragen ist. Der Übergang zwischen den Bereichen 102 und 104 ist dabei als scharfe Grenzfläche dargestellt, welche mathematisch durch eine Sprungfunktion beschrieben werden kann.

Wie zuvor bereits ausgeführt wurde, ist in Fig. 1 a) nur eine idealisierte Abbildung einer Materialgrenzfläche 100 dargestellt. Eine solche Abbildung ist jedoch technisch aufgrund verschiedener Umstände nicht realisierbar. So ist aus der Theorie der elektrischen Signalverarbeitung bekannt, dass ein Signal immer nur mit einer begrenzten Bandbreite verarbeitet werden kann. Folglich ist eine scharfe Kante, welche mathematisch einer Überlagerung unendlich vieler periodischer Signale entspricht, in der Signal- und Bildverarbeitung nicht realisierbar. Vielmehr fließt in die Abbildung eines Objekts stets die Punktspreizfunktion (point-spread-function, PSF) des abbildenden Systems ein. Mathematisch entspricht die Wirkung des bandbegrenzten Abbildungssystems einer Faltung des abzubildenden Signals mit der PSF des Systems. Dabei hat die PSF eines Abbildungssystems häufig die angenäherte Form einer Gauß-Glocke.

In Fig. 1b ist eine reale Darstellung desselben Materialübergangs 100 abgebildet. Auch hier ist rechts eine zweidimensionale Draufsicht auf den Materialübergang 100 abgebildet, während links der Verlauf der Röntgendichte entlang des Pfeils 106 abgebildet ist. Aus der Faltung der scharfen Kante, wie sie in Fig. 1 a) dargestellt ist, mit einer gaußförmigen PSF des abbildenden Systems, ergibt sich so eine verschwommene Kante, bei der die exakte Position der Materialgrenzfläche 100 nicht mehr klar erkennbar ist. Es gibt im Stand der Technik jedoch verschiedene Ansätze, wie aus einem solchen Kantenverlauf trotz der unscharfen Grenzfläche eine Kantenposition bestimmt werden kann. Ein prominentes Beispiel hierfür ist der Canny-Algorithmus, welcher aus dem Gradienten und der zweiten Ableitung des Grauwertverlaufs die Kantenposition bestimmt. Ein weiterer Ansatz zur Bestimmung der Kantenposition besteht darin, die Differenz des maximalen bzw. minimalen Grauwertes in den Bereichen 102 und 104 zu ermitteln und anschließend anzunehmen, dass an der Stelle, an der der Grauwert der Hälfte dieser Differenz entspricht, die Kante liegen muss.

Problematisch sind diese Ansätze jedoch, sobald nicht eine isolierte Grenzfläche vorliegt, sondern eine Abfolge von dicht benachbarten Materialgrenzflächen. Ein solcher Fall ist in idealisierter, nicht verschwommener Darstellung, beispielhaft in Fig. 1 c) dargestellt. Auch hier liegt in dem ersten Bereich 102 beispielsweise Luft vor, während in dem zweiten Bereich 104 beispielsweise ein Metall vorliegt. Das in Fig. 1 c) dargestellte Bild kann beispielsweise entstehen, wenn das Metall im Bereich 104 an seiner Oberfläche mit einer Beschichtung versehen ist, deren spezifische Röntgenabsorption sich von der Absorption durch Metall unterscheidet. Die Beschichtung ist dann als zusätzlicher Bereich 108 mit einer von Luft und Metall verschiedenen Graustufe sichtbar. Dabei ist der Bereich 108 sehr schmal. Bei einer Beschichtung kann es sich beispielsweise um eine Schicht mit einer Dicke von wenigen Mikrometern handeln.

Die zuvor beschriebenen "Verschmierung" des Kantenverlaufs aufgrund der PSF des Systems führt nun dazu, dass der verschmierte Verlauf der einfachen Materialgrenzfläche kaum von einer Abfolge dicht benachbarter Materialgrenzflächen unterscheidbar ist. Tatsächlich erscheint das Resultat einer Faltung des in Fig. 1 c) dargestellten Kantenverlaufs sehr ähnlich zu dem Kantenverlauf, der in Fig. 1 b) dargestellt ist. Folglich ist mit den im Stand der Technik bekannten Verfahren eine Unterscheidung einer einfachen Kante von einer Abfolge dicht benachbarter Kanten, also einer "Mehrfachkante" zunächst nicht möglich.

Erfindungsgemäß kann jedoch auch aus dem verschmierten Verlauf einer Mehrfachkante die Position der einzelnen Materialgrenzflächen ermittelt werden, wenn bei der Untersuchung des Grauwertverlaufs schon bekannt ist, dass es sich nicht um eine isolierte Grenzfläche, sondern um eine Mehrfachkante handelt. Aus dem Wissen heraus, dass eine Mehrfachkante vorliegt, kann abgeleitet werden, wie eine solche Mehrfachkante nach einer Faltung mit der PSF des Systems aussehen müsste. Vergleicht man nun das so erhaltene Modell mit dem vorgefundenen Verlauf der Grauwerte und/oder mit einem Verlauf von aus den Grauwerten abgeleiteten Werten, können die Positionen der einzelnen Materialgrenzflächen der Mehrfachkante bestimmt werden. Dabei wird erfindungsgemäß durch den Bildpunkten zugeordnete Parameter angezeigt, ob bei der Untersuchung eines Grauwertverlaufs im Bereich einer Materialgrenzfläche von einer isolierten Grenzfläche ausgegangen werden soll, oder ob eine Mehrfachkante vorliegt, sodass ein entsprechendes Modell zugrunde gelegt werden soll.

Dabei ist das erfindungsgemäße Verfahren nicht auf eine direkte Abfolge von zwei Materialgrenzflächen beschränkt. Es ist vielmehr auch möglich, dass eine beliebige Anzahl dicht benachbarter Grenzflächen spezifiziert wird, sodass bei der Analyse der Grauwerte beispielsweise von einer Abfolge von fünf benachbarten Materialgrenzflächen ausgegangen wird. Eine solche Abfolge kann beispielsweise bei einer lackierten Oberfläche entstehen, bei der übereinander eine Grundierung, ein Farblack und ein Klarlack aufgetragen sind, die jeweils nur mit Dicken von wenigen Mikrometern vorliegen.

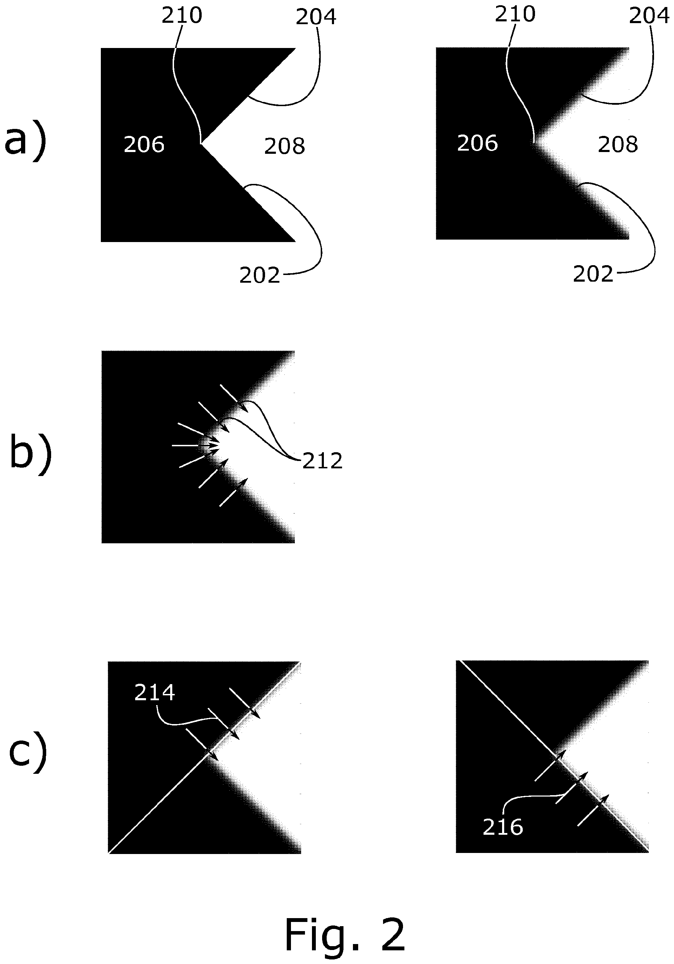

Die Fig. 2 a) zeigt eine schematische Darstellung einer Ecke, also einer Geometrie, bei der zwei Materialgrenzflächen 202 und 204 in einem rechten Winkel aufeinandertreffen. Wird eine solche Geometrie durch ein bildgebendes Verfahren, wie beispielsweise durch eine Computertomographie, abgebildet, erhält man beispielsweise die in Fig. 2 a) rechts dargestellte Abbildung. Bei den in Fig. 2 a) dargestellten Materialgrenzflächen 202 und 204 kann es sich beispielsweise erneut jeweils um den Übergang von Luft zu einem Metall handeln.

Die zuvor beschriebenen Mechanismen, welche zu einem "verwaschen" von an sich scharfen Kanten führen, verursachen im Bereich der Ecke 210, also jenem Punkt, an dem die Materialgrenzflächen 202 und 204 aufeinandertreffen ein Abrunden der an sich spitzen Ecke 210, wie es in Fig. 2 a) rechts dargestellt ist. Algorithmen, wie beispielsweise der zuvor genannte Canny-Algorithmus, welche sich den Gradienten eines Grauwertverlaufs zunutze machen, um die Position einer verschwommenen Materialgrenzfläche zu ermitteln, erzeugen zwangsläufig bei einer verschwommenen Ecke einen Fehler bei der Bestimmung der Lage der Materialgrenzflächen im Bereich der Spitze 210. Hierzu sind exemplarisch in der Fig. 2 b) die lokalen Gradienten entlang der Materialgrenzflächen durch Pfeile 212 dargestellt. In den Bereichen, in denen die Materialgrenzflächen 202 und 204 einen geraden Verlauf aufweisen und die Grauwerte der Materialgrenzflächen 202 und 204 nicht von dem Übergang im Bereich der Spitze 210 beeinflusst sind, steht der Gradient tatsächlich senkrecht auf den Materialgrenzflächen 202 und 204. Somit sind hier bei einer Anwendung des Canny-Operators gute Ergebnisse bei der Bestimmung der Position der Materialgrenzflächen zu erwarten.

Im Bereich der Spitze 210 funktioniert dieser Ansatz jedoch nicht mehr. Wie in Fig. 2 b) gut zu erkennen ist, schwenkt der Gradient im Bereich der Spitze 210 nämlich nur allmählich von der Ausrichtung im Bereich der ersten Materialgrenzfläche 202 zur Ausrichtung im Bereich der zweiten Materialgrenzfläche 204 um. Wäre die Ecke jedoch perfekt abgebildet, müsste der Gradient an der Spitze 210 instantan von seiner ersten Ausrichtung zur zweiten Ausrichtung "umklappen". Dies ist jedoch aufgrund der verschwommenen Ecke nicht der Fall. Folglich würde durch den Canny-Operator keine spitze Ecke detektiert werden, sondern lediglich eine abgerundete Ecke. Die exakte Position der Spitze 210 und der genaue Verlauf der Materialgrenzflächen 202 und 204 bis hin zur Spitze sind somit durch den Canny-Operator nicht feststellbar.

Die Erfindungsgemäße Lösung dieses Umstands ist exemplarisch in der Fig. 2 c) dargestellt. Erfindungsgemäß wird bei der Ermittlung der Materialgrenzflächen 202 und 204 die Richtung, entlang derer nach einer Materialgrenzfläche gesucht werden soll von vornherein festgelegt. Dabei wird für einer erste Materialgrenzfläche 202 eine erste Analyserichtung 214 (links) und für eine zweite Materialgrenzfläche 204 eine zweite Analyserichtung 216 (rechts) festgelegt. Dabei werden die Analyserichtungen über die komplette Breite der Materialgrenzflächen 202 und 204 beibehalten. Dies führt unter anderem dazu, dass im Bereich der Spitze 210 von einzelnen Messpunkten in mehreren Richtungen nach einer Materialgrenzfläche gesucht wird. Somit sind diesen Messpunkten erfindungsgemäß mehrere Parameter zugeordnet, welche jeweils eine Analyserichtung vorgeben. Dies ist in der Fig. 2 c) der Übersichtlichkeit halber jedoch nicht explizit dargestellt. Durch die feste Vorgabe der Analyserichtung ist insbesondere im Bereich der Spitze 210 eine exakte Bestimmung der Lage der Materialgrenzflächen 202 und 204 möglich.

Obwohl in der Fig. 2 nur der zweidimensionale Fall dargestellt ist, ist die Erfindung in analoger Art und Weise auch in einer dreidimensionalen Abbildung eines Objekts anwendbar. In diesem Szenario können einzelnen Messpunkten auch durchaus mehr als zwei Parameter zur Definition einer Analyserichtung zugeordnet sein.

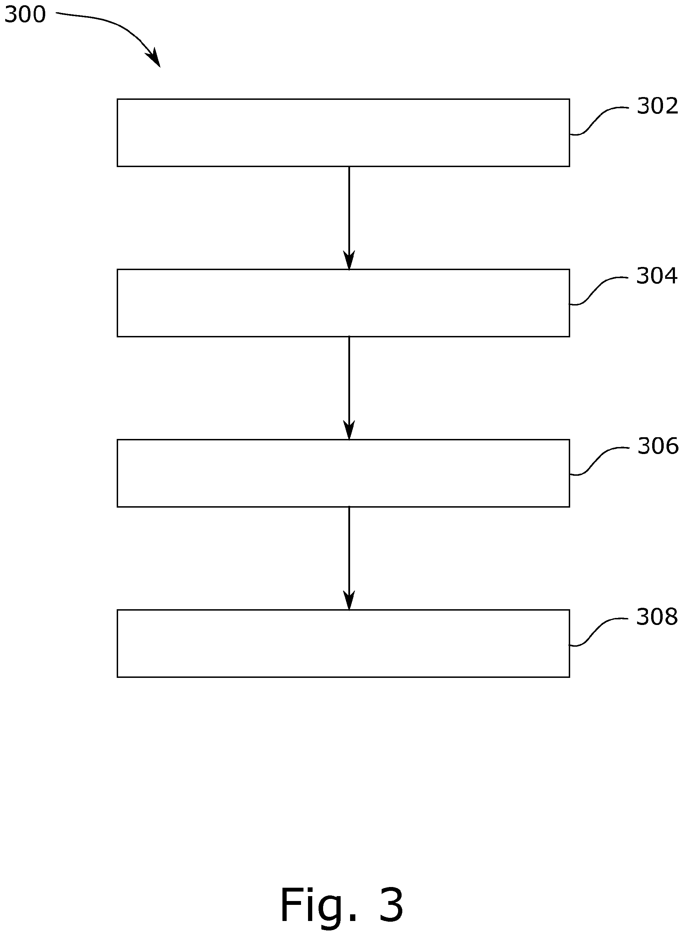

In Fig. 3 ist ein Ablaufdiagramm einer Ausführungsform des erfindungsgemäßen Verfahrens dargestellt. Das Verfahren kann beispielsweise mit einer Vorrichtung umgesetzt werden, welche wenigstens einen Computertomographen, sowie eine mit dem Computertomographen verbundene Datenverarbeitungseinrichtung umfasst. Die Datenverarbeitungseinrichtung muss dabei nicht zwingend als zusammenhängende, physische Entität vorliegen, sondern kann auch dezentral, bspw. im Sinne des Cloud-Computings ausgeführt sein.

In einem ersten Verfahrensschritt 302 des in Fig. 3 dargestellten Verfahrens 300 wird eine Messung an einem zu untersuchenden Objekt durchgeführt. Bei dem Objekt kann es sich beispielsweise um ein Bauteil handeln, welches aus einer Fertigungsstraße entnommen wurde und zur Qualitätssicherung einer Prüfung unterzogen werden soll. Bei der Messung handelt es sich vorzugsweise um eine computertomographische Messung, wie es zuvor bereits ausgeführt wurde. Das Verfahren kann jedoch grundsätzlich auch auf die Messergebnisse anderer bildgebender Verfahren, beispielsweise der Magnetresonanztomographie oder 3D-Ultraschall, angewendet werden.

Durch die Messung werden zunächst Rohdaten erzeugt, welche im Falle der Computertomographie beispielsweise eine Vielzahl von Röntgenbildern des untersuchten Objekts aus einer Vielzahl von Richtungen entsprechen. Aus den so erhaltenen Rohdaten wird in Schritt 204 eine dreidimensionale Abbildung des untersuchten Objekts erzeugt, wobei die Abbildung gerastert ist. Zur Rekonstruktion des Objekts kann beispielsweise eine gefilterte Rückprojektion auf die zuvor bestimmten Rohdaten angewendet werden. Die Rasterung des rekonstruierten Objekts kann dann beispielsweise erfolgen, indem das rekonstruierte Objekt mit einem dreidimensionalen Gitter überlagert wird, wobei jedem Volumenelement des Gitters der entsprechende lokale Grauwert des Objekts im Bereich des Volumenelements (Voxels) zugeordnet wird. Üblicherweise wird das Raster beispielsweise bei der Computertomographie durch die Anordnung der einzelnen Sensoren der verwendeten Sensoranordnung vorgegeben. Es ist jedoch auch möglich ein hiervon abweichendes Raster zu definieren.

Nach erfolgter Rekonstruktion und Rasterung des untersuchten Objekts wird anschließend in Schritt 306 eine Parametrisierung des gerasterten Objekts ermittelt. Hierzu kann beispielsweise eine Nutzerschnittstelle vorgesehen sein, über die ein Anwender Bereiche des rekonstruierten, untersuchten Objekts markiert, an denen Mehrfachkanten vorliegen. Ferner kann durch die Parametrisierung auch eine Richtung spezifiziert werden, in der, ausgehend von einem Voxel, nach Materialgrenzflächen gesucht werden soll.

Neben einer Nutzereingabe kann eine Parametrisierung auch durch eine erste Abtastung des rekonstruierten Objekts nach Materialgrenzflächen ermittelt werden. Hierzu kann beispielsweise zunächst unter der Annahme, dass das gesamte Objekt nur grade, einfache Materialgrenzflächen aufweist, eine Abtastung des gesamten Objekts erfolgen, sodass eine Vielzahl von Kantenpositionen ermittelt wird. Anschließend können die so ermittelten Kantenpositionen dahingehend überprüft werden, wie gut der an der Kantenposition vorliegende Grauwertverlauf überhaupt zu dem theoretisch zu erwartenden Grauwertverlauf für eine isolierte, grade Materiagrenzfläche passt. Wird dabei, beispielsweise über einen Chi-Quadrat Test ermittelt, dass der vorgefundene Grauwertverlauf nicht hinreichend gut mit dem zu erwartenden Grauwertverlauf übereinstimmt, wird den Voxeln in der Umgebung der untersuchten Materialgrenzfläche ein Parameter zugeordnet, der anzeigt, dass hier nach einer Mehrfachkante, oder nach einer gekrümmten Kante gesucht werden sollte.

Nachdem die Parametrisierung des rekonstruierten Objekts erfolgt ist, werden anschließend in Schritt 308 parameterabhängige Kantenfindungsoperatoren auf das rekonstruierte Objekt angewandt. Dabei wird auf jeden Voxel oder zumindest eine Teilmenge der Voxel Kantenfindungsoperatoren angewendet, welche aus dem Grauwert des Voxels und den Grauwerten der benachbarten Voxel die Position von Materialgrenzflächen bestimmen. Die Art des angewendeten Kantenfindungsoperators wird dabei durch den Parameter bestimmt, der dem Voxel zugeordnet ist. Wird beispielsweise durch den Parameter des untersuchten Voxels angezeigt, dass in der Umgebung des Voxels eine Mehrfachkante vorliegt, welche aus drei einzelnen Materialgrenzflächen aufgebaut ist, wird ein entsprechender Kantenfindungsoperator auf den untersuchten Voxel angewandt, welcher nach einer eben solchen Mehrfachkante sucht. Dabei kann es durchaus vorkommen, dass einem Voxel mehrere Parameter zugeordnet sind. So kann durch die Parametrisierung eines Voxels beispielsweise angezeigt sein, dass in einer bestimmten Richtung eine Abfolge von mehreren Materialgrenzflächen vorliegt. Der Mehrfachkantenoperator ist dann dazu ausgebildet, ein den Werten der Parametrisierung entsprechendes theoretisches Modell des Grauwertverlaufs zu erstellen, und das Modell mit den Grauwerten der umliegenden Voxel zu vergleichen. Aus dem Vergleich der tatsächlichen Grauwerte mit dem theoretischen Modell kann dann die exakte Position der Materialgrenzflächen ermittelt werden.

Die Erfindung ist nicht auf eine der vorbeschriebenen Ausführungsformen beschränkt, sondern in vielfältiger Weise innerhalb des Schutzumfangs der Ansprüche abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen innerhalb des Schutzumfangs der Ansprüche dungswesentlich sein.

### Bezugszeichenliste

- 100: Materialgrenzfläche
- 102: erster Bereich
- 104: zweiter Bereich
- 106: Richtung
- 108: dritter Bereich
- 202: Materialgrenzfläche
- 204: Materialgrenzfläche
- 206: Bereich
- 208: Bereich
- 210: Spitze
- 212: Pfeil
- 214: erste Analyserichtung
- 216: zweite Analyserichtung

## Patentansprüche

1. Computer-implementiertes Verfahren zur Bestimmung von Materialgrenzflächen eines Objekts mittels wenigstens einer Messung an dem Objekt,
wobei durch die Messung eine gerasterte Darstellung des Objekts erzeugt wird,
wobei die gerasterte Darstellung eine Vielzahl von Messpunkten aufweist,
wobei ein Messpunkt wenigstens eine Bildinformation aufweist, welche einen Wert einer Messgröße für das Objekt an der Position des Messpunktes anzeigt,
wobei das Verfahren die folgenden Schritte aufweist:
• Ermitteln einer Parametrisierung der gerasterten Darstellung des Objekts, wobei die Parametrisierung den Messpunkten einer Teilmenge der Messpunkte der Darstellung jeweils wenigstens einen Parameter zuordnet,
• Anwenden wenigstens eines parameterabhängigen Kantenfindungsoperators auf die Messpunkte der gerasterten Darstellung, wobei ein Kantenfindungsoperator dazu ausgebildet ist, die Lage von wenigstens einer Materialgrenzfläche in der gerasterten Darstellung zu ermitteln,
wobei der Kantenfindungsoperator bei dem Ermitteln der Lage einer Materialgrenzfläche aus der Bildinformation eines Messpunkts wenigstens die Bildinformationen einer Teilmenge der zu dem Messpunkt in der gerasterten Darstellung benachbarten Messpunkte berücksichtigt,
wobei es sich bei wenigstens einem der Kantenfindungsoperatoren um einen Mehrfachkantenfindungsoperator handelt, der dazu ausgebildet ist, bei Anwendung auf einen Messpunkt die Lage von wenigstens zwei direkt benachbarten Materialgrenzflächen in dem Objekt zu ermitteln, und
wobei der Mehrfachkantenfindungsoperator genau dann auf einen Messpunkt angewendet wird, wenn wenigstens einer der Parameter des Messpunktes anzeigt, dass innerhalb der Umgebung des Messpunktes mehrere Materialgrenzflächen direkt benachbart zueinander angeordnet sind, und
wobei das Ermitteln der Parametrisierung die folgenden Schritte aufweist:
• Anwenden wenigstens eines Einzelkantenfindungsoperators auf die Messpunkte der gerasterten Darstellung, wobei der Einzelkantenfindungsoperator dazu ausgebildet ist, die Lage einer einzelnen Materialgrenzfläche in der gerasterten Darstellung zu ermitteln,
• Ermitteln eines Unsicherheitsmaßes für die Lage der ermittelten Materialgrenzflächen,
• wenn das ermittelte Unsicherheitsmaß für eine Materialgrenzfläche einen definierten Grenzwert übersteigt, das Zuordnen eines Parameters zu den Messpunkten in der Umgebung der Materialgrenzfläche, wobei der Parameter anzeigt, dass innerhalb der Umgebung des Messpunktes mehrere Materialgrenzflächen direkt benachbart zueinander angeordnet sind.

2. Verfahren nach Anspruch 1, **dadurch gekennzeichnet, dass** die Bildinformation eines Messpunkts wenigstens einen Grauwert umfasst, der den Wert der Messgröße für das Objekt am Ort des Messpunkts anzeigt und wobei der Mehrfachkantenfindungsoperator dazu ausgebildet ist, ausgehend von einem Messpunkt durch einen Fit eines theoretischen Modells der Grauwerte für eine Mehrfachkante an den Verlauf der Grauwerte von Messpunkten in der Umgebung des Messpunktes die Lage der einzelnen Materialgrenzflächen einer Mehrfachkante zu ermitteln.

3. Verfahren nach Anspruch 1 oder 2, **dadurch gekennzeichnet, dass** die Parametrisierung für eine Teilmenge der Messpunkte jedem Messpunkt der Teilmenge jeweils wenigstens zwei Parameter zuordnet, wobei für die Messpunkte der Teilmenge je zugeordnetem Parameter ein parameterabhängiger Kantenfindungsoperator auf den Messpunkt angewendet wird.

4. Verfahren nach einem der vorherigen Ansprüche, **dadurch gekennzeichnet, dass** wenigstens einer der Parameter eines Messpunktes eine Analyserichtung innerhalb der gerasterten Darstellung definiert, wobei die Kantenfindungsoperatoren bei Anwendung auf einen Messpunkt dazu ausgebildet sind, entlang der durch den Parameter des Messpunktes definierten Analyserichtung die Lage wenigstens einer Materialgrenzfläche zu ermitteln.

5. Verfahren nach Anspruch 4, **dadurch gekennzeichnet, dass** für eine Teilmenge der Messpunkte durch wenigstens zwei der Parameter eines Messpunktes der Teilmenge jeweils eine Analyserichtung definiert wird, wobei je Analyserichtung wenigstens ein Kantenfindungsoperator auf den Messpunkt angewendet wird, der entlang der jeweiligen Analyserichtung die Lage wenigstens einer Materialgrenzfläche ermittelt.

6. Verfahren nach einem der vorherigen Ansprüche, **dadurch gekennzeichnet, dass** die Parametrisierung aus einem Modell des untersuchten Objekts bestimmt wird.

7. Verfahren nach Anspruch 6, **dadurch gekennzeichnet, dass** es sich bei dem Modell um ein CAD-Modell handelt.

8. Verfahren nach einem der vorherigen Ansprüche, **dadurch gekennzeichnet, dass** die Parametrisierung durch wenigstens eine Benutzereingabe erzeugt wird.

9. Vorrichtung zur Durchführung von Messungen an einem Objekt und zur Bestimmung von Materialgrenzflächen eines Objekts mittels wenigstens einer Messung an dem Objekt,
wobei durch die Messung eine gerasterte Darstellung des Objekts erzeugt wird,
wobei die gerasterte Darstellung eine Vielzahl von Messpunkten aufweist,
wobei ein Messpunkt wenigstens eine Bildinformation aufweist, welche einen Wert einer Messgröße für das Objekt an der Position des Messpunktes anzeigt,
wobei die Vorrichtung dazu ausgebildet ist:
• eine Parametrisierung der aus der Messung erhaltenen gerasterten Darstellung des Objekts zu ermitteln, wobei die Parametrisierung den Messpunkten einer Teilmenge der Messpunkte der Darstellung jeweils wenigstens einen Parameter zuordnet,
• wenigstens einen parameterabhängigen Kantenfindungsoperator auf die Messpunkte der gerasterten Darstellung anzuwenden, wobei ein Kantenfindungsoperator dazu ausgebildet ist, aus der Bildinformation eines Messpunkts die Lage von wenigstens einer Materialgrenzfläche in der gerasterten Darstellung zu ermitteln,
wobei der Kantenfindungsoperator bei dem Ermitteln der Lage einer Materialgrenzfläche aus der Bildinformation eines Messpunkts wenigstens die Bildinformationen einer Teilmenge der zu dem Messpunkt in der gerasterten Darstellung benachbarten Messpunkte berücksichtigt,
wobei es sich bei wenigstens einem der Kantenfindungsoperatoren um einen Mehrfachkantenfindungsoperator handelt, der dazu ausgebildet ist, bei Anwendung auf einen Messpunkt die Lage von wenigstens zwei direkt benachbarten Materialgrenzflächen in dem Objekt zu ermitteln, und
wobei der Mehrfachkantenfindungsoperator genau dann auf einen Messpunkt angewendet wird, wenn wenigstens einer der Parameter des Messpunktes anzeigt, dass innerhalb der Umgebung des Messpunktes mehrere Materialgrenzflächen direkt benachbart zueinander angeordnet sind, und
wobei die Vorrichtung weiterhin dazu ausgebildet ist, dass das Ermitteln der Parametrisierung die folgenden Schritte aufweist:
• Anwenden wenigstens eines Einzelkantenfindungsoperators auf die Messpunkte der gerasterten Darstellung, wobei der Einzelkantenfindungsoperator dazu ausgebildet ist, die Lage einer einzelnen Materialgrenzfläche in der gerasterten Darstellung zu ermitteln,
• Ermitteln eines Unsicherheitsmaßes für die Lage der ermittelten Materialgrenzflächen,
• wenn das ermittelte Unsicherheitsmaß für eine Materialgrenzfläche einen definierten Grenzwert übersteigt, das Zuordnen eines Parameters zu den Messpunkten in der Umgebung der Materialgrenzfläche, wobei der Parameter anzeigt, dass innerhalb der Umgebung des Messpunktes mehrere Materialgrenzflächen direkt benachbart zueinander angeordnet sind.

10. Computerprogrammprodukt mit von einem Computer ausführbaren Instruktionen, welche auf einem Computer ausgeführt den Computer dazu veranlassen, das Verfahren nach einem der Ansprüche 1 bis 8 durchzuführen.

## Claims

1. Computer-implemented method for determining material interfaces of an object by means of at least one measurement on the object,
wherein a rasterized representation of the object is generated by the measurement,
wherein the rasterized representation has a multiplicity of measurement points,
wherein a measurement point has at least one item of image information which indicates a value of a measurement variable for the object at the position of the measurement point,
wherein the method has the following steps:
• determining a parameterization of the rasterized representation of the object, wherein the parameterization assigns at least one parameter to each of the measurement points of a subset of the measurement points of the representation,
• applying at least one parameter-dependent edge-detection operator to the measurement points of the rasterized representation, wherein an edge-detection operator is designed to determine the location of at least one material interface in the rasterized representation,
wherein, in the determination of the location of a material interface from the image information of a measurement point, the edge-detection operator takes into account at least the image information of a subset of the measurement points adjacent to the measurement point in the rasterized representation, wherein at least one of the edge-detection operators is a multiple edge-detection operator which is designed, when applied to a measurement point, to determine the location of at least two directly adjacent material interfaces in the object, and
wherein the multiple edge-detection operator is applied to a measurement point if and only if at least one of the parameters of the measurement point indicates that a plurality of material interfaces are arranged directly adjacent to one another within the surroundings of the measurement point, and wherein determining the parameterization comprises the following steps:
• applying at least one single edge-detection operator to the measurement points of the rasterized representation, wherein the single edge-detection operator is designed to determine the location of an individual material interface in the rasterized representation,
• determining a measure of uncertainty for the location of the material interfaces determined,
if the measure of uncertainty determined for a material interface exceeds a defined threshold value, assigning a parameter to the measurement points in the surroundings of the material interface, wherein the parameter indicates that a plurality of material interfaces are arranged directly adjacent to one another within the surroundings of the measurement point.

2. Method according to Claim 1, **characterized in that** the image information of a measurement point comprises at least one grey-scale value which indicates the value of the measurement variable for the object at the location of the measurement point, and wherein the multiple edge-detection operator is designed to determine the location of the individual material interfaces of a multiple edge proceeding from a measurement point by fitting a theoretical model of the grey-scale values for a multiple edge to the profile of the grey-scale values of measurement points in the surroundings of the measurement point.

3. Method according to Claim 1 or 2, **characterized in that** the parameterization for a subset of the measurement points assigns in each case at least two parameters to each measurement point of the subset, wherein for the measurement points of the subset, a parameter-dependent edge-detection operator is applied to the measurement point for each assigned parameter.

4. Method according to any one of the preceding claims, **characterized in that** at least one of the parameters of a measurement point defines an analysis direction within the rasterized representation, wherein the edge-detection operators are designed, when applied to a measurement point, to determine the location of at least one material interface along the analysis direction defined by the parameter of the measurement point.

5. Method according to Claim 4, **characterized in that** an analysis direction is defined for each subset of the measurement points by at least two of the parameters of a measurement point of the subset, wherein, for each analysis direction, at least one edge-detection operator is applied to the measurement point which determines the location of at least one material interface along the analysis direction in question.

6. Method according to any one of the preceding claims, **characterized in that** the parameterization is determined from a model of the object under examination.

7. Method according to Claim 6, **characterized in that** the model is a CAD model.

8. Method according to any one of the preceding claims, **characterized in that** the parameterization is generated by at least one user input.

9. Device for carrying out measurements on an object and for determining material interfaces of an object by means of at least one measurement on the object,
wherein a rasterized representation of the object is generated by the measurement,
wherein the rasterized representation has a multiplicity of measurement points,
wherein a measurement point has at least one item of image information which indicates a value of a measurement variable for the object at the position of the measurement point,
wherein the device is designed to:
• determine a parameterization of the rasterized representation of the object obtained from the measurement, wherein the parameterization assigns at least one parameter to each of the measurement points of a subset of the measurement points of the representation,
• apply at least one parameter-dependent edge-detection operator to the measurement points of the rasterized representation, wherein an edge-detection operator is designed to determine the location of at least one material interface in the rasterized representation from the image information of a measurement point,
wherein, in the determination of the location of a material interface from the image information of a measurement point, the edge-detection operator takes into account at least the image information of a subset of the measurement points adjacent to the measurement point in the rasterized representation, wherein at least one of the edge-detection operators is a multiple edge-detection operator which is designed, when applied to a measurement point, to determine the location of at least two directly adjacent material interfaces in the object, and
wherein the multiple edge-detection operator is applied to a measurement point if and only if at least one of the parameters of the measurement point indicates that a plurality of material interfaces are arranged directly adjacent to one another within the surroundings of the measurement point, and wherein the device is furthermore designed to the effect that determining the parameterization comprises the following steps:
• applying at least one single edge-detection operator to the measurement points of the rasterized representation, wherein the single edge-detection operator is designed to determine the location of an individual material interface in the rasterized representation,
• determining a measure of uncertainty for the location of the material interfaces determined,
if the measure of uncertainty determined for a material interface exceeds a defined threshold value, assigning a parameter to the measurement points in the surroundings of the material interface, wherein the parameter indicates that a plurality of material interfaces are arranged directly adjacent to one another within the surroundings of the measurement point.

10. Computer program product having instructions which are executable by a computer and, when executed on a computer, cause the computer to carry out the method according to any one of Claims 1 to 8.

## Revendications

1. Procédé mis en œuvre par ordinateur pour déterminer des surfaces limites de matériau d'un objet au moyen d'au moins une mesure effectuée sur l'objet,
une représentation tramée de l'objet étant générée par la mesure,
la représentation tramée comportant une pluralité de points de mesure,
un point de mesure comportant au moins une information d'image qui indique une valeur d'une grandeur de mesure pour l'objet à la position du point de mesure,
le procédé comprenant les étapes consistant à :
• déterminer un paramétrage de la représentation tramée de l'objet, le paramétrage associant respectivement au moins un paramètre aux points de mesure d'un sous-ensemble des points de mesure de la représentation,
• appliquer au moins un opérateur de recherche d'arêtes dépendant des paramètres aux points de mesure de la représentation tramée, un opérateur de recherche d'arêtes étant conçu pour déterminer l'emplacement d'au moins une surface limite de matériau dans la représentation tramée, l'opérateur de recherche d'arêtes prenant en considération, lors de la détermination de l'emplacement d'une surface limite de matériau, parmi les informations d'image d'un point de mesure, au moins les informations d'image d'un sous-ensemble des points de mesure voisins du point de mesure dans la représentation tramée,
au moins l'un des opérateurs de recherche d'arêtes étant un opérateur de recherche d'arêtes multiples qui est conçu pour, lors de l'application à un point de mesure, déterminer l'emplacement d'au moins deux surfaces limites de matériau directement voisines dans l'objet, et
l'opérateur de recherche d'arêtes multiples étant alors appliqué précisément à un point de mesure lorsqu'au moins l'un des paramètres du point de mesure indique que plusieurs surfaces limites de matériau sont disposées de manière directement adjacente les unes aux autres dans l'environnement du point de mesure, et
la détermination du paramétrage comprenant les étapes consistant à :
• appliquer au moins un opérateur de recherche d'arête unique aux points de mesure de la représentation tramée, l'opérateur de recherche d'arête unique étant conçu pour déterminer l'emplacement d'une surface limite de matériau unique dans la représentation tramée,
• déterminer une mesure d'incertitude pour l'emplacement des surfaces limites de matériau déterminées,
• lorsque la mesure d'incertitude déterminée pour une surface limite de matériau dépasse une valeur limite définie, associer un paramètre aux points de mesure dans l'environnement de la surface limite de matériau, le paramètre indiquant que, dans l'environnement du point de mesure, plusieurs surfaces limites de matériau sont disposées de manière directement adjacente les unes aux autres.

2. Procédé selon la revendication 1, **caractérisé en ce que** l'information d'image d'un point de mesure comprend au moins une valeur de gris qui indique la valeur de la grandeur de mesure pour l'objet à l'endroit du point de mesure et l'opérateur de recherche d'arêtes multiples étant conçu pour déterminer, à partir d'un point de mesure, l'emplacement des surfaces limites de matériau individuelles d'une arête multiple par un ajustement d'un modèle théorique des valeurs de gris pour une arête multiple à la courbe des valeurs de gris de points de mesure dans l'environnement du point de mesure.

3. Procédé selon la revendication 1 ou 2, **caractérisé en ce que** le paramétrage pour un sous-ensemble des points de mesure associe respectivement au moins deux paramètres à chaque point de mesure du sous-ensemble, un opérateur de recherche d'arêtes dépendant des paramètres étant appliqué au point de mesure pour les points de mesure du sous-ensemble pour chaque paramètre associé.

4. Procédé selon l'une des revendications précédentes, **caractérisé en ce qu'**au moins l'un des paramètres d'un point de mesure définit une direction d'analyse dans la représentation tramée, les opérateurs de recherche d'arêtes étant conçus, lorsqu'ils sont appliqués à un point de mesure, pour déterminer l'emplacement d'au moins une surface limite de matériau le long de la direction d'analyse définie par le paramètre du point de mesure.

5. Procédé selon la revendication 4, **caractérisé en ce que**, pour un sous-ensemble des points de mesure, une direction d'analyse est respectivement définie par au moins deux des paramètres d'un point de mesure du sous-ensemble, au moins un opérateur de recherche d'arêtes étant appliqué au point de mesure pour chaque direction d'analyse, lequel détermine l'emplacement d'au moins une surface limite de matériau le long de la direction d'analyse respective.

6. Procédé selon l'une des revendications précédentes, **caractérisé en ce que** le paramétrage est déterminé à partir d'un modèle de l'objet examiné.

7. Procédé selon la revendication 6, **caractérisé en ce que** le modèle est un modèle de CAO.

8. Procédé selon l'une des revendications précédentes, **caractérisé en ce que** le paramétrage est généré par au moins une entrée d'utilisateur.

9. Dispositif pour effectuer des mesures sur un objet et pour déterminer des surfaces limites de matériau d'un objet au moyen d'au moins une mesure effectuée sur l'objet,
une représentation tramée de l'objet étant générée par la mesure,
la représentation tramée comportant une pluralité de points de mesure,
un point de mesure comportant au moins une information d'image qui indique une valeur d'une grandeur de mesure pour l'objet à la position du point de mesure,
le dispositif étant conçu pour :
• déterminer un paramétrage de la représentation tramée de l'objet obtenue à partir de la mesure, le paramétrage associant respectivement au moins un paramètre aux points de mesure d'un sous-ensemble des points de mesure de la représentation,
• appliquer au moins un opérateur de recherche d'arêtes dépendant des paramètres aux points de mesure de la représentation tramée, un opérateur de recherche d'arêtes étant conçu pour déterminer, parmi les informations d'image d'un point de mesure, l'emplacement d'au moins une surface limite de matériau dans la représentation tramée,
l'opérateur de recherche d'arêtes prenant en considération, lors de la détermination de l'emplacement d'une surface limite de matériau, parmi les informations d'image d'un point de mesure, au moins les informations d'image d'un sous-ensemble des points de mesure voisins du point de mesure dans la représentation tramée,
au moins l'un des opérateurs de recherche d'arêtes étant un opérateur de recherche d'arêtes multiples qui est conçu pour, lors de l'application à un point de mesure, déterminer l'emplacement d'au moins deux surfaces limites de matériau directement voisines dans l'objet, et l'opérateur de recherche d'arêtes multiples étant alors appliqué précisément à un point de mesure lorsqu'au moins l'un des paramètres du point de mesure indique que plusieurs surfaces limites de matériau sont disposées de manière directement adjacente les unes aux autres dans l'environnement du point de mesure, et
le dispositif étant en outre conçu pour que la détermination du paramétrage comprenne les étapes consistant à :
• appliquer au moins un opérateur de recherche d'arête unique aux points de mesure de la représentation tramée, l'opérateur de recherche d'arête unique étant conçu pour déterminer l'emplacement d'une surface limite de matériau unique dans la représentation tramée,
• déterminer une mesure d'incertitude pour l'emplacement des surfaces limites de matériau déterminées,
• lorsque la mesure d'incertitude déterminée pour une surface limite de matériau dépasse une valeur limite définie, associer un paramètre aux points de mesure dans l'environnement de la surface limite de matériau, le paramètre indiquant que, dans l'environnement du point de mesure, plusieurs surfaces limites de matériau sont disposées de manière directement adjacente les unes aux autres.

10. Produit de programme d'ordinateur comprenant des instructions exécutables par un ordinateur qui, lorsqu'elles sont exécutées sur un ordinateur, amènent l'ordinateur à mettre en œuvre le procédé selon l'une des revendications 1 à 8.
